# EUROPEAN PATENT SPECIFICATION

(11) **EP 0 658 362 B1**
(45) Date of publication and mention of the grant of the patent: **25.11.1998**
(21) Application number: 94119523.2
(22) Date of filing: 09.12.1994
(51) Int. Cl.: B01D 35/30

(54) **Fuel filter master module with optional diverter capability**
Hauptfiltrationsmodul für Brennstoff mit wahlweisen Umstellmöglichkeiten
Maître-filtre modulaire pour carburant avec système de détournement facultatif

(30) Priority: 13.12.1993 US 166226; 30.09.1994 US 315910
(43) Date of publication of application: 21.06.1995
(73) Proprietor: STANADYNE AUTOMOTIVE CORP., Windsor Connecticut 06095 (US)
(72) Inventor: Janik, Leon P., Suffield, Connecticut 06078 (US); Maxwell, M. Craig, Colchester, Connecticut 06415 (US); Zeiner, Robert W., Torrington, Connecticut 06790 (US)
(74) Representative: Glawe, Delfs, Moll & Partner

(56) References cited:
- EP-A- 0 529 782
- DE-A- 4 032 758
- DE-C- 4 013 839

## Description

### Background of the Invention

This invention relates generally to devices for filtering and separating liquids. More particularly, the present invention relates to filters for filtering fuel or lubricating oil of an internal combustion engine and removing foreign particles and separating water therefrom.

The absence of high standards of quality control in diesel fuel supplies dictates that an effective fuel filter be incorporated into the fuel supply system of a diesel engine. It is not uncommon for diesel fuel to have significant quantities of abrasive particles and water. The abrasive particles present the potential for permanent damage to components of the fuel injection pump. The abrasive particles can also adversely affect the performance of the pump by destroying the ability of the fuel injection pump to precisely meter and deliver fuel at high pressures. The presence of water in the diesel fuel supply can cause corrosion of engine components, and during freezing conditions, can result in interruption of the fuel injection system and/or seizure of moving components. Similarly, water and particulate matter in the lubricating oil must be removed to minimize wear of engine parts.

Commonly, filters employ a disposable filter cartridge which is replaced at pre-established intervals of filter usage. The cartridge is secured to a base that is fixedly mounted to the engine header or some other fixed location.

Some engine designs require a source of low pressure fuel during certain operating events, particularly while starting a cold engine. The low pressure fuel is generally supplied by an injection fuel pump located between the fuel filter and the engine.

U.S. Patent No. 4,976,852 and U.S. Patent No. 5,084,170, which are assigned to the assignee of the present invention, disclose fuel filter assemblies to which the present invention relates. The fuel filters employ a base which mounts a disposable filter cartridge. In some disclosed embodiments, the cartridge includes a single stage filter system wherein fuel flows axially and radially to a filter element for removing particulate matter. The filter element also functions as a water barrier. Filtered fuel flows axially and exits through an outlet passage of the base. The water may be collected in a sump and periodically removed. The cartridge is secured to the base by a collar which engages against a roll seam structure of the cartridge.

EP-A-0 529 782 discloses a fuel filter assembly for filtering a flow of fluid having a base defining a chamber and a cap for sealing the chamber. The base further includes a first inlet, a first conduit for defining a first axial passage in fluid communication with the first inlet, a first outlet, a second conduit for defining a second axial passage in fluid communication with the first outlet, an axially extending receptacle, and first locking means. The closure means includes second locking means and is mountable to the receptacle. The first and second locking means are engageable to lock the closure means to the base member. DE-A-40 32 758 discloses a method for supplying fuel to an engine intake manifold. The method includes the steps of supplying of flow of fuel to a fuel filter assembly and selectively diverting fuel from the fuel filter assembly to the intake manifold. Both the fuel filter assembly of EP-A-0 529 782 and the fuel filter used for the method of DE-A 40 32 758 merely have one inlet and one outlet which makes necessary e. g. in case of the method to provide several separate conduits for recollecting unused fuel and for operating an engine intake manifold burner.

An object of the invention is to provide a new and improved filter master module which is readily adaptable for mounting or not mounting a diverter valve module which provides auxiliary fuel communication with an engine or other related unit as the production requirements vary.

Another object of the invention is to provide a new and improved filter module wherein a diverter valve module may be mounted at the filter assembly, thereby diminishing the magnitude of pressure and heat losses and the extent of mounting hardware between a filter assembly and a cold climate start igniter which are characteristic of conventional related systems.

A further object of the invention is to provide a new and improved master module having efficient and effective means for selectively diverting fuel from a fuel supply line system.

### Summary of the Invention

Briefly stated, the invention in a preferred form is a filter module comprising a base member which comprises a receptacle adaptable to mount either a blanking plug or a diverter valve module for a cold climate start igniter. The plug may be replaced by the valve module for use with those engines that require a source of low pressure fuel during certain phases of operation. The lower portion of the valve module is inserted into the base member receptacle. The valve module is then turned approximately 90° to engage locking tabs on the valve module with flanges on the base member. Locating the valve module at the filter eliminates loss of head in the line due to friction and also reduces the number of required fittings in the fuel line. The base member design ensures efficient fluid flow operation through the filter and fuel lines for both the diverter module and the plug configurations.

The diverter valve module provides a source of low pressure fuel flow to the engine. A solenoid operated valve is housed in a compartment in the upper portion of the module housing. In a preferred application, the solenoid valve selectively opens to provide an auxiliary source of fuel during engine startup. A pressure regulator valve is housed in a second compartment in the lower portion of the module housing. A diverter path is defined in the valve module. The pressure regulator valve maintains a backpressure in a chamber to ensure that there is sufficient head to drive the diverted fuel flow to the intake manifold of the engine or for other applications.

The base member functions in part as a fuel line junction and therefore has a number of fluid line connectors. The receptacle leads from a central chamber which is configured to provide fluid communication with the diverter valve module if required. In one embodiment for a cold climate start igniter application, a first outlet connector connects with an outlet line to provide fluid communication with the fuel injection pump. A pump return connector connects with a return line to provide fluid communication with the fuel injection pump via the pump return passageway. A portion of the fuel flow from the fuel injection pump is thereby returned to the filter assembly. The pump return passageway is in fluid communication with the chamber located in the base member via a first control orifice. The first orifice is sized to regulate the return flow from the fuel injection pump. A second outlet connector connects with an outlet line to provide fluid communication with the fuel tank via the fuel tank return passageway. A portion of the fuel flow is returned to the fuel tank thereby. The fuel tank return passageway is in fluid communication with the base chamber via a second control orifice. The second orifice is sized to restrict the return flow to the fuel tank.

A locking mechanism is employed to lock the blanking plug or the diverter valve module to the receptacle. The locking mechanism may take the form of pairs of catches and locking tabs.

The base module is assembled with a mounting module, a disposable filter cartridge and either a blanking plug or a diverter valve module to constitute a filter assembly such as may be especially adapted for incorporation into the fuel supply system or lubricating oil system of an internal combustion engine, such as a diesel engine, for removing particulate matter from the fuel or oil and for separating water from the fuel or oil.

Other objects and advantages of the invention will become apparent from the drawings and the specification.

### Brief Description of the Drawings

The present invention may be better understood and its numerous objects and advantages will become apparent to those skilled in the art by reference to the accompanying drawings in which:
Figure 1 is an exploded view of a modular fuel filter assembly in accordance with the present invention;
Figure 2 is an enlarged sectional view, partly in phantom, of the filter assembly of Figure 1 assembled with the mounting module, diverter valve module, base module and filter cartridge of Figure 1;
Figure 3 is an enlarged sectional view, partly in schematic, of the assembled base module and diverter valve module of Figure 2 and a line to an engine intake manifold; and
Figure 4 is a sectional view of the filter base module of Figure 3 taken along the line 4-4 thereof.

### Detailed Description of the Preferred Embodiment

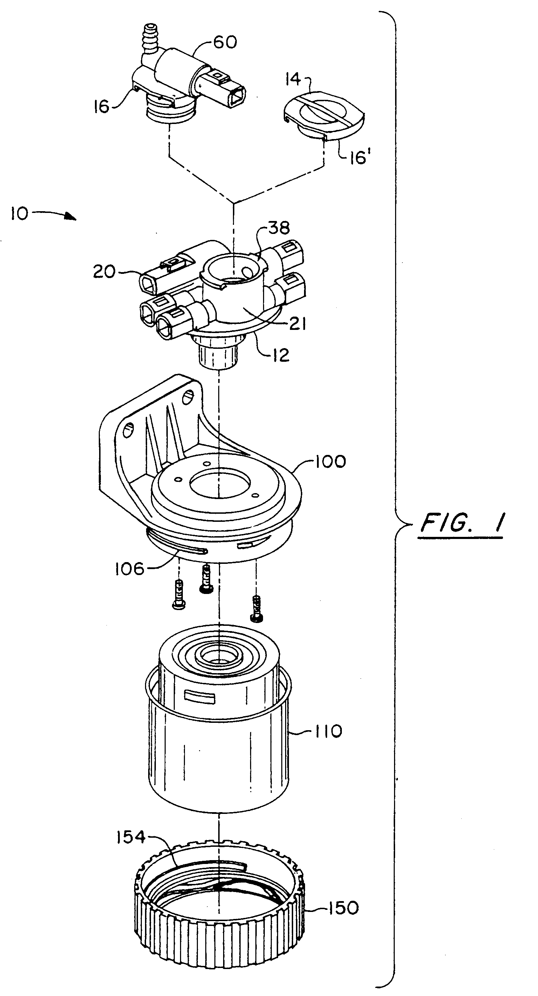

With reference to the drawings wherein like numerals represent like parts throughout the several figures, a modular filter assembly in accordance with the present invention is generally designated by the numeral 10. With reference to Figure 1, a filter base module 12 is assembled with a mounting module 100, a disposable filter cartridge 110 and either a blank cap-like plug 14 or a diverter valve module 60 to form the modular filter assembly 10. In a preferred embodiment, the filter assembly 10 is especially adapted for incorporation into the fuel supply system or lubricating oil system of an internal combustion engine (not illustrated), such as a diesel engine, for removing particulate matter from the fuel or oil and for separating water from the fuel or oil.

The filter assembly is adaptable to be readily configured during production with either the blanking plug 14 or the diverter valve module 60 which may have numerous applications. In one preferred application, the module 60 diverts a supply of low pressure fuel to the intake manifold 11 for a cold climate start igniter (not illustrated). The mounting module 100 is fixedly mounted to the engine or other fixed location of the vehicle. Filter cartridge 110 is secured to the mounting module by means of a retainer collar 150.

With reference to Figure 1, the filter base module 12 comprises a base member 20 which readily receives and fluidically seals with either a plug 14 or a diverter valve module 60 as the production requirements may dictate during a production cycle. For example, the plug 14 may be replaced by a diverter valve module 60 for use with those engines that require a source of low pressure fuel for ignition in an intake manifold igniter during cold engine starting. This modularity provides great flexibility and reduced costs during the manufacturing of the filter assembly 10 and during the assembly line production due to the ready adaptability to either incorporate or not incorporate the diverter valve module as production requirements vary. The base member 20 and the banking plug 14 are precision molded from a polymeric material, for example, Valox DR-48™, Ultradur B-4300-G4™, or RTP 1103™. The housing 66 for the valve module 60 may be molded from polymeric material or composed of metal.

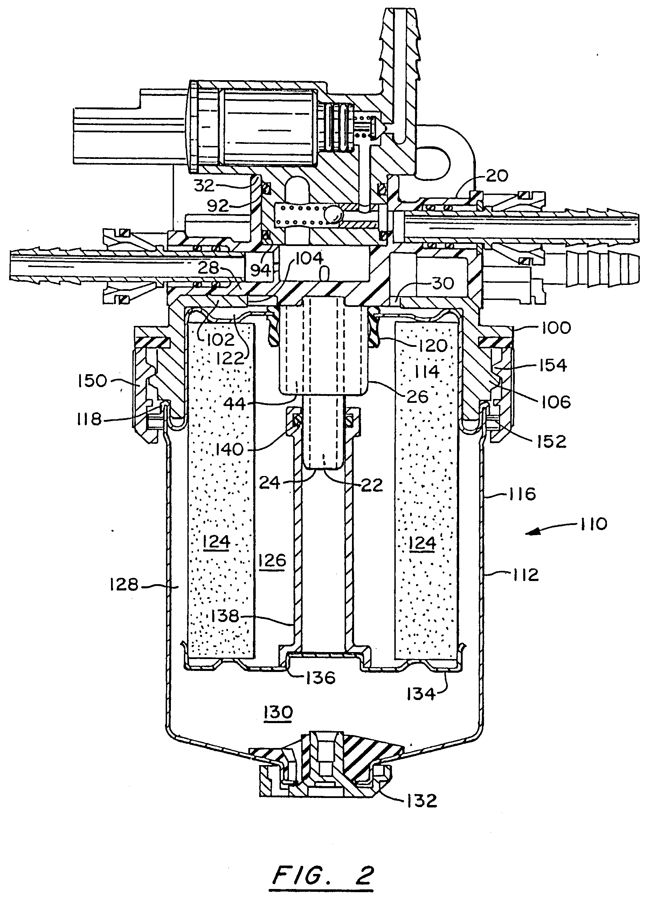

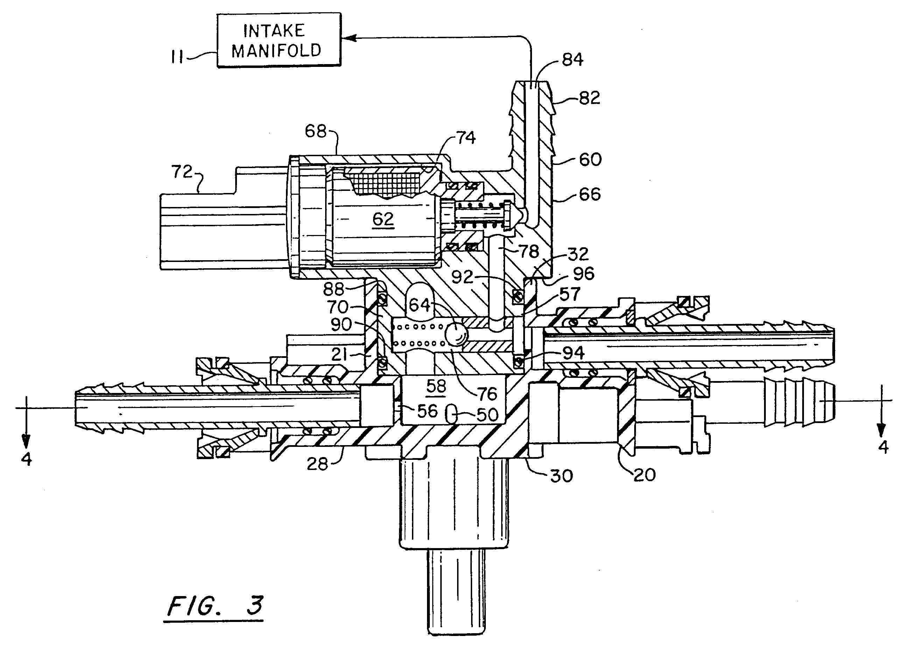

With reference to Figure 2, the base member 20 is an integral member which in part functions as a fluid line junction. The base member 20 mounts and provides fluid communication means with the filter cartridge 110. The base member 20 comprises an elongated sleeve-like first conduit 24 defining a central axial bore 22, an intermediate concentric sleeve-like second conduit 26 of reduced length, a coupling plate 28 and a locating ring 30. As shown in Figure 3, the upper portion of the base member 20 has a cylindrical receptacle 21 defining an upper cavity 57 and a lower chamber 58. The receptacle 21 upwardly terminates in a circumferential lip 32. If the plug is installed, the upper lip 32 of the base member abuts an annular ring of the plug 14 to seal the receptacle. If the valve module 60 is installed, a lower portion 70 of the valve module 60 is closely received in the first cavity 57 of the receptacle and the base member upper lip 32 abuts a shoulder 96 of the module housing 66. The plug 14 and the valve module housing 66 each have locking catches 16, 16' which angularly engage outwardly projecting tabs 38 of the base member 20 (Figure 1). First and second O-rings 92, 94 housed in first and second grooves 88, 90 on the valve module housing lower portion 70 provide a fluid tight connection with respect to the base member 20.

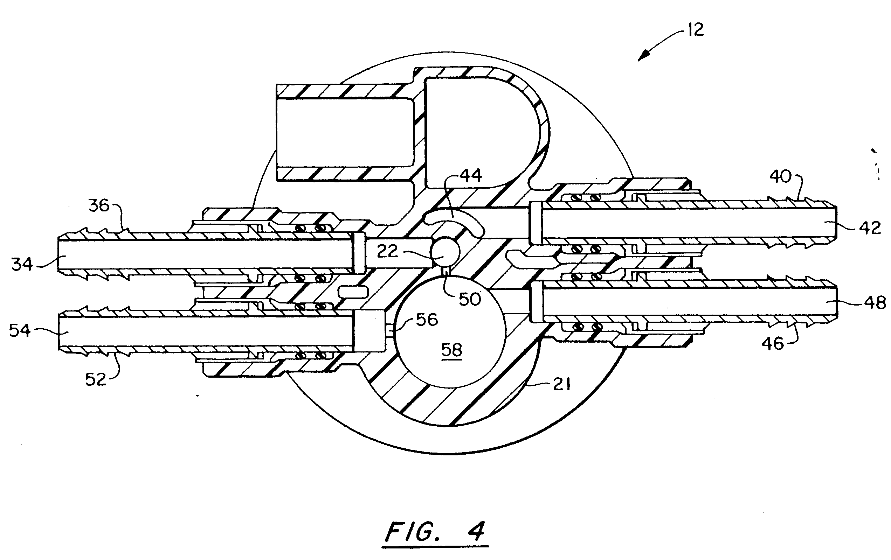

The first and second conduits 24 and 26 provide generally co-axial fluid communication between the filter module 10 and the disposable cartridge 110. With additional reference to Figure 4, a first inlet passage 34 includes an inlet connector 36 at a filter module side location for connection with a supply line from the fuel tank (not shown). The inlet passage 34 provides fluid communication with the cartridge via the axial central bore 22 defined by the first conduit 24.

A first outlet connector 40 at a filter module side location connects with an outlet line (not shown) to provide fluid communication with the fuel injection pump (not shown) via passageway 42 from the axial fluid conduit 44 defined between the first and second conduits 24 and 26. A return connector 46 at a filter module side location connects with a return line (not shown) to provide fluid communication with the fuel injection pump via passageway 48. A portion of the fuel flow from the fuel injection pump is thereby returned to the chamber 58 in the base member 20. A first control orifice 50 located in chamber 58 regulates the return flow from the fuel injection pump. In a preferred embodiment, the first orifice has a diameter of 4 mm. A second outlet connector 52 at a filter module side location connects with an outlet line (not shown) to provide fluid communication with the fuel tank via passageway 54. A portion of the fuel flow is returned to the fuel tank thereby. Passageway 54 is in fluid communication with the chamber 58 of the receptacle via a second control orifice 56. In a preferred embodiment, the second control orifice 56 has a diameter of 2 mm to restrict the return flow to the fuel tank.

The diverter valve module 60 selectively provides a source of low pressure fuel flow to the engine. The valve module 60 snaps into position and seals in the base member receptacle cavity 57 after being turned 90° to lock the catches 16' with the tabs 38. With reference to Figure 3, a solenoid operated valve 62 is housed in a first cavity or compartment 74 in the upper portion 68 of the module housing 66. The upper portion 68 and the lower portion 70 of the housing 66 are oriented in generally orthogonal relationship. The solenoid valve 62 is connected to the ignition (not shown) via an electrical connector 72. A signal from a temperature controller and a starter solenoid causes the solenoid valve 62 to energize, opening the valve and allowing a flow of low pressure fuel to the engine intake manifold 11.

A pressure regulator in the form of a pressure relief valve 64 is housed in a second compartment 76 in the lower portion 70 of the module housing 66. A diverter path 78 extends from the chamber to an outlet connector 82 via relief valve 64 and diverter valve 62. The relief valve 64 maintains a backpressure in the filter assembly 10 to insure that there is sufficient head to drive the fuel flow to the engine. In a preferred embodiment, a suitable backpressure is approximately 12.5 kpa. An outlet connector 82 extends in a generally axial offset relationship to the lower mounting portion 70 and connects with an outlet line to provide fluid communication with the engine via passageway 84.

With reference to Figure 2, the mounting module 100 is generally located at the underside of the base module 12. The mounting module 100, which may be cast from metal, comprises a coupling plate 102 having an aperture 104 for receiving the first and the second conduits 24 and 26 and the locating ring 30. The mounting module 100 includes a pair of integral outwardly projecting, diametrically disposed ramps 106. Each of the ramps ascends in spiral-like fashion in excess of 90° around the mounting module 100. The upper ends of the ramps are beveled. Stops (not shown) are angularly spaced from the respective upper ends of the ramps 106. The base module 12 and mounting module 100 define an inverted cup-like receptacle having a lower receiving cavity for the upper portions of the disposable cartridge.

The disposable filter cartridge 110 comprises a can-like container 112 which is formed by a pair of lower and upper cup-like metal sections 114, 116 which are joined along a circumferential roll seam 118. The truncated upper section 116 is a molded member which includes a central axial opening. An upper sealing grommet 120 mounted at the opening inwardly seals against the outer conduit 26. The top surface of container section 122 is contoured to form an annular recess.

A filter element 124 which has a continuous fan-shaped pleated configuration is housed within the container 112. The filter element 124 axially extends approximately three quarters of the length of the container 112. The filter element 124 thus defines an interior axial chamber 126 and quasi-annular outer chamber 128. The filter element 124 is affixed with resin binders or other water coalescers so that as fuel or oil passes through the filter element 124, the water coalesces to form water droplets. A water barrier may also be employed. A sump 130 is formed at the bottom of the lower section 114 to collect water which coalesces from the fuel or oil. A drain valve 132 is disposed in the sump 130 for draining the water.

The lower end of the filter element 124 is engaged by a plate 134 which has a central port 136. A tubular structure 138, coaxial to the central port 136, engages the plate 134 and extends upward a part of the length of the interior axial chamber 126. The tubular structure 138 coaxially receives a lower portion of the inner conduit 24 wherein the vertical gap between the lower end of the outer conduit 26 and the upper exterior end of the tubular structure 138 defines a passage for the flow of fuel or oil out of the filter element 124 via the axial fluid conduit 44. A lower sealing grommet 140 mounted adjacent the upper end of the tubular structure 138 inwardly seals against the inner conduit 24. Alternatively, the disposable cartridge may comprise dual filter elements (not illustrated) and other filter configurations.

The retainer collar 150 includes a rim-like shoulder 152 for retentively engaging the roll seam 118. Spiral-like ramps 154 of the collar 150 are dimensioned and positionable for engagement with the ramps 106 and stops of the mounting module 100, so that the collar ramps 154 slideably engage and ascend the mounting module ramps 106 upon alignment and angular rotation of the collar 150. The inclination angle of the upper surfaces of the mounting module ramps 106 and the underside surfaces of the collar ramps 154 are constant and substantially equal. The upper ramp surfaces of the mounting module ramps 106 and the underside surface of the retainer collar ramps 154 engage along an extended substantially surface-to-surface interface. The locked position may be facilitated by the leading end of the collar ramps 154 engaging the stops.

## Claims

1. A modular filter assembly (10) for filtering a flow of fluid, the filter assembly having a base including a base member (20) defining a chamber (58) and closure means (14, 60) for sealing the chamber (58), the base member further having a first inlet (36), a first outlet (40), a first conduit (24) for interiorly defining a first axial passage (22), the first axial passage (22) being in fluid communication with the first inlet (36), a second conduit (26) for defining a second axial passage (44), the second axial passage (44) being in fluid communication with the first outlet (40), an axially extending receptacle (21), and first locking means (38), the closure means having second locking means (16, 16'), said closure means (14, 60) being mountable to said receptacle (21) wherein said first locking means (38) is engageable with said second locking means (16, 16') to lock said closure means (14, 60) to said base member (20), characterised by:
said base member (20) further comprising a second inlet (46) and a second outlet (52), said second inlet (46) and said second outlet (52) being in fluid communication with said chamber (58); and
said closure means comprises either a blanking plug (14) or a diverter valve module (60).

2. The filter assembly of claim 1 characterised in that said closure means (14) comprises a cap-like plug (14).

3. The filter assembly of claim 1 characterized in that said closure means (60) comprises housing means having first (70) and second (68) portions, said first housing means portion (70) being closely received in said base member receptacle (21).

4. The filter assembly of claim 3 characterised in that said closure means (60) further comprises an auxiliary outlet (82) and diverter path means (78) defining a diverter passage (78) extending from said chamber (58) to said auxiliary outlet (82).

5. The filter assembly of claim 4 characterised in that said closure means (60) further comprises valve means (62) for selectively controlling the passage of fluid in said diverter passage (78) through said auxiliary outlet (82).

6. The filter assembly of claim 5 characterised in that said valve means (62) further comprises a solenoid operated valve.

7. The filter assembly of claim 1 characterised in that said first locking means (38) comprises a pair of oppositely positioned tabs.

8. The filter assembly of claim 7 characterised in that said second locking means (16, 16') comprises a pair of oppositely positioned catches which are angularly positionable to lock with said tabs.

9. The filter assembly of claim 1 characterised in that said closure means (60) comprises housing means having first (70) and second (68) portions disposed in generally orthogonal relationship, said first housing means portion (70) being received in said base member receptacle (21).

10. The filter assembly of claim 3 characterised in that said closure means (60) further comprises a solenoid operated valve (62) disposed in said second portion (68).

11. The filter assembly of claim 10 characterised in that said closure means (60) further comprises an auxiliary outlet (82) and diverter path means for defining a diverter passage (78) extending from said chamber (58) to said auxiliary outlet (82).

12. The filter assembly of claim 11 characterised in that said solenoid valve (62) selectively controls fluid communication through said auxiliary outlet (82).

13. The filter assembly of claims 6 and 11 characterised in that said closure means (60) further comprises pressure regulating means (64) for regulating pressure in said diverter passage (78).

14. The filter assembly of claim 1 characterised in that said second locking means (16, 16') comprises a pair of oppositely positioned locking flanges.

15. The filter assembly of claim 13 characterised in that said pressure regulating means (64) comprises a spring biased valve member.

16. The filter assembly of claims 1 - 15 characterised in that said closure means (14, 60) further comprises seal means comprising a seal ring.

## Patentansprüche

1. Modularer Filteraufbau (10) zum Filtern einer Fluidströmung, wobei der Filteraufbau einen Grundteil einschließlich eines Grundteilgliedes (20), das eine Kammer (58) begrenzt, und Verschlußmittel (14,60) zum Verschließen der Kammer (58) aufweist, wobei das Grundteilglied weiter einen ersten Einlaß (36), einen ersten Auslaß (40), eine erste Leitung (24), um innen einen ersten axialen Durchlaß (22) zu bilden, wobei der erste axiale Durchlaß (22) in Fluidverbindung mit dem ersten Einlaß (36) steht, eine zweite Leitung (26) zum Bilden eines zweiten axialen Durchlasses (44), wobei der zweite axiale Durchlaß (44) in Fluidverbindung mit dem ersten Auslaß (40) steht, einen sich axial erstreckenden Aufnahmeraum (21) und erste Verriegelungsmittel (38) aufweist, wobei die Verschlußmittel zweite Verriegelungsmittel (16,16') aufweisen, wobei die Verschlußmittel (14,60) an dem Aufnahmeraum (21) anbringbar sind, wobei die ersten Verriegelungsmittel (38) mit den zweiten Verriegelungsmitteln (16,16') in Eingriff bringbar sind, um die Verschlußmittel (16,60) am Grundteilglied (20) zu verriegeln, dadurch gekennzeichnet, daß das Grundteilglied (20) weiter einen zweiten Einlaß (46) und einen zweiten Auslaß (52) aufweist, wobei der zweite Einlaß (46) und der zweite Auslaß (52) in Fluidverbindung mit der Kammer (58) sind, und daß die Verschlußmittel entweder einen Blindstopfen (14) oder ein Umleitventilmodul (60) aufweisen.

2. Filteraufbau nach Anspruch 1, dadurch gekennzeichnet, daß die Verschlußmittel (14) einen kappenförmigen Stopfen (14) aufweisen.

3. Filteraufbau nach Anspruch 1, dadurch gekennzeichnet, daß die Verschlußmittel (60) Gehäusemittel aufweisen, die erste (70) und zweite (68) Bereiche aufweisen, wobei der erste Gehäusemittelbereich (70) eng in dem Aufnahmeraum (21) des Grundteilgliedes aufgenommen ist.

4. Filteraufbau nach Anspruch 3, dadurch gekennzeichnet, daß die Verschlußmittel (60) weiter einen Hilfsauslaß (82) und Umleitwegmittel (78) aufweisen, die einen Umleitdurchlaß (78) begrenzen, der sich von der Kammer (58) zu dem Hilfsauslaß (82) erstreckt.

5. Filteraufbau nach Anspruch 4, dadurch gekennzeichnet daß die Verschlußmittel (60) weiter Ventilmittel (62) zum selektiven Steuern des Durchlassens von Fluid in dem Umleitdurchlaß (78) durch den Hilfsauslaß (82) aufweisen.

6. Filteraufbau nach Anspruch 5, dadurch gekennzeichnet, daß die Ventilmittel (62) weiter ein solenoidbetriebenes Ventil aufweisen.

7. Filteraufbau nach Anspruch 1, dadurch gekennzeichnet, daß die ersten Verriegelungsmittel (38) ein Paar von gegenüber voneinander angeordneten Vorsprüngen aufweisen.

8. Filteraufbau nach Anspruch 7, dadurch gekennzeichnet, daß die zweiten Verriegelungsmittel (16,16') ein Paar von gegenüber voneinander angeordneten Klauen haben, die winkelmäßig angeordnet sind, um mit den Vorsprüngen zu verriegeln.

9. Filteraufbau nach Anspruch 1, dadurch gekennzeichnet, daß die Verschlußmittel (60) Gehäusemittel aufweisen, die erste (70) und zweite (68) Bereiche haben, die in allgemein orthgogonaler Beziehung angeordnet sind, wobei der erste Gehäusemittelbereich (70) in dem Aufnahmeraum (21) des Grundteilgliedes aufgenommen ist.

10. Filteraufbau nach Anspruch 3, dadurch gekennzeichnet, daß die Verschlußmittel (60) weiter ein solenoidbetriebenes Ventil (62) aufweisen, das in dem zweiten Bereich (68) angeordnet ist.

11. Filteraufbau nach Anspruch 10, dadurch gekennzeichnet, daß die Verschlußmittel (60) weiter einen Hilfsauslaß (82) und Umleitwegmittel aufweisen, um einen Umleitdurchlaß (78) zu bilden, der sich von der Kammer (58) zum Hilfsauslaß (82) erstreckt.

12. Filteraufbau nach Anspruch 11, dadurch gekennzeichnet, daß das Solenoidventil (62) selektiv Fluidverbindung durch den Hilfsauslaß (82) steuert.

13. Filteraufbau nach Anspruch 6 und 11, dadurch gekennzeichnet, daß die Verschlußmittel (60) Druckreguliermittel (64) zum Regulieren des Druckes in dem Umleitdurchlaß (78) aufweisen.

14. Filteraufbau nach Anspruch 1, dadurch gekennzeichnet, daß die zweiten Verriegelungsmittel (16,16') ein Paar voneinander gegenüber angeordneten Verriegelungsflanschen aufweisen.

15. Filteraufbau nach Anspruch 13, dadurch gekennzeichnet, daß die Druckregulierungsmittel (64) ein federvorgespanntes Ventilglied aufweisen.

16. Filteraufbau nach den Ansprüchen 1 bis 15, dadurch gekennzeichnet daß die Verschlußmittel (14,60) weiter Dichtungsmittel aufweisen, die einen Dichtring aufweisen.

## Revendications

1. Ensemble de filtre modulaire (10) pour filtrer un flux de fluide, l'ensemble de filtre comprenant une base se composant d'un élément de base (20) définissant une chambre (58) et de moyens de fermeture (14, 60) pour rendre étanche la chambre (58), l'élément de base comprenant en outre une première entrée (36), une première sortie (40), un premier conduit (24) pour définir intérieurement un premier passage axial (22), le premier passage axial (22) communiquant avec la première entrée (36) pour assurer le passage du fluide, un second conduit (26) définissant un second passage axial (44), le second passage axial (44) étant en communication avec la première sortie (40) pour assurer le passage du fluide, un collecteur (21) s'étendant axialement et un premier moyen de ver-rouillage (38), les moyens de fermeture comprenant des seconds moyens de verrouillage (16, 16'), lesdits moyens de fermeture (14, 60) étant montés sur ledit collecteur (21) où ledit premier moyen de verrouillage (38) peut être engagé avec lesdits seconds moyens de verrouillage (16, 16') pour verrouiller lesdits moyens de fermeture (14, 60) sur ledit élément de base (20), caractérisé - en ce que ledit élément de base (20) se compose en outre d'une seconde entrée (46) et d'une seconde sortie (52), ladite seconde entrée (46) et ladite seconde sortie (52) communiquant avec ladite chambre (58) pour assurer le passage du fluide ; et - en ce que lesdits moyens de fermeture se composent d'un bouchon d'obturation (14) ou d'un module de vanne de dérivation (60).

2. Ensemble de filtre selon la revendication 1, caractérisé en ce que ledit moyen de fermeture (14) se compose d'un bouchon (14) semblable à un couvercle.

3. Ensemble de filtre selon la revendication 1, caractérisé en ce que ledit moyen de fermeture (60) se compose de moyens formant boîtier comprenant une première (70) et une seconde (68) parties, ladite première partie (70) des moyens formant boîtier étant étroitement ajustée dans ledit collecteur (21) de l'élément de base.

4. Ensemble de filtre selon la revendication 3, caractérisé en ce que ledit moyen de fermeture (60) se compose en outre d'une sortie auxiliaire (82) et d'un moyen (78) formant une trajectoire de dérivation définissant un passage de dérivation (78) s'étendant depuis ladite chambre (58) jusqu'à ladite sortie auxiliaire (82).

5. Ensemble de filtre selon la revendication 4, caractérisé en ce que ledit moyen de fermeture (60) se compose en outre d'un moyen (62) formant vanne pour commander sélectivement le passage du fluide dans ledit passage de dérivation (78) à travers ladite sortie auxiliaire (82).

6. Ensemble de filtre selon la revendication 5, caractérisé en ce que ledit moyen (62) formant vanne se compose en outre d'une électrovanne.

7. Ensemble de filtre selon la revendication 1, caractérisé en ce que ledit premier moyen de verrouillage (38) se compose d'une paire de pattes positionnées de façon opposée.

8. Ensemble de filtre selon la revendication 7, caractérisé en ce que lesdits moyens de verrouillage (16, 16') se composent d'une paire d'encoches positionnées de façon opposée et positionnées de façon angulaire pour assurer le verrouillage en étant associés auxdites pattes.

9. Ensemble de filtre selon la revendication 1, caractérisé en ce que ledit moyen de fermeture (60) se compose de moyens formant boîtier ayant une première (70) et une seconde (68) parties disposées de façon généralement orthogonale, ladite première partie (70) des moyens formant boîtier étant logée dans ledit collecteur (21) de l'élément de base.

10. Elément de filtre selon la revendication 3, caractérisé en ce que ledit moyen de fermeture (60) se compose en outre d'une électrovanne (62) disposée dans ladite seconde partie (68).

11. Ensemble de filtre selon la revendication 10, caractérisé en ce que ledit moyen de fermeture (60) se compose en outre d'une sortie auxiliaire (82) et d'un moyen formant trajectoire de dérivation pour définir un passage (78) de dérivation s'étendant depuis ladite chambre (58) jusqu'à ladite sortie auxiliaire (82).

12. Ensemble de filtre selon la revendication 11, caractérisé en ce que ladite électrovanne (62) commande sélectivement la communication du fluide à travers ladite sortie auxiliaire (82).

13. Ensemble de filtre selon les revendications 6 et 11, caractérisé en ce que ledit moyen de fermeture (60) se compose en outre d'un moyen (64) de régulation de la pression pour réguler la pression dans ledit passage (78) de dérivation.

14. Ensemble de filtre selon la revendication 1, caractérisé en ce que lesdits moyens de verrouillage (16, 16') se composent d'une paire de brides de verrouillage positionnées de façon opposée.

15. Ensemble de filtre selon la revendication 13, caractérisé en ce que ledit moyen (64) de régulation de la pression se compose d'un élément de vanne actionné par un ressort.

16. Ensemble de filtre selon les revendications 1 à 15, caractérisé en ce que lesdits moyens de fermeture (14, 60) comprennent en outre un moyen d'étanchéité se composant d'un joint d'étanchéité.
